(19) Europäisches Patentamt / European Patent Office / Office européen des brevets

(11) **EP 4 322 255 A1**

(12) **EUROPEAN PATENT APPLICATION**
published in accordance with Art. 153(4) EPC

(43) Date of publication:
**14.02.2024  Bulletin 2024/07**

(21) Application number: **22896108.2**

(22) Date of filing: **17.11.2022**

(51) International Patent Classification (IPC):
**H01M 4/38** (2006.01)   **C01B 33/021** (2006.01)
**H01M 10/052** (2010.01)   **H01M 4/02** (2006.01)

(52) Cooperative Patent Classification (CPC):
**C01B 33/021; H01M 4/02; H01M 4/38;**
**H01M 10/052; Y02E 60/10**

(86) International application number:
**PCT/KR2022/018234**

(87) International publication number:
**WO 2023/090911 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **19.11.2021  KR 20210159927**

(71) Applicant: **LG Energy Solution, Ltd.**
**Seoul 07335 (KR)**

(72) Inventors:
• **JUN, Hyunmin**
  **Daejeon 34122 (KR)**
• **KIM, Donghyuk**
  **Daejeon 34122 (KR)**
• **LEE, Yong Ju**
  **Daejeon 34122 (KR)**

(74) Representative: **Hoffmann Eitle**
**Patent- und Rechtsanwälte PartmbB**
**Arabellastraße 30**
**81925 München (DE)**

(54) **ANODE ACTIVE MATERIAL, ANODE COMPRISING SAME ANODE ACTIVE MATERIAL, SECONDARY BATTERY COMPRISING SAME ANODE, AND METHOD FOR PREPARING SAME ANODE ACTIVE MATERIAL**

(57)    The present invention relates to a negative electrode active material, a negative electrode including the negative electrode active material, a secondary battery including the negative electrode, and a method for preparing the negative electrode active material.

EP 4 322 255 A1

**Description**

[Technical Field]

This application claims priority to and the benefit of Korean Patent Application No. 10-2021-0159927 filed in the Korean Intellectual Property Office on November 19, 2021, the entire contents of which are incorporated herein by reference.

The present invention relates to a negative electrode active material, a negative electrode including the negative electrode active material, a secondary battery including the negative electrode, and a method for preparing the negative electrode active material.

[Background Art]

Recently, with the rapid spread of electronic devices using batteries such as mobile phones, notebook-sized computers, and electric vehicles, the demand for small and lightweight secondary batteries having relatively high capacity is rapidly increasing. In particular, lithium secondary batteries are lightweight and have high energy density, and thus have attracted attention as driving power sources for mobile devices. Accordingly, research and development efforts to improve the performance of lithium secondary batteries have been actively conducted.

In general, a lithium secondary battery includes a positive electrode, a negative electrode, a separator interposed between the positive electrode and the negative electrode, an electrolyte solution, an organic solvent and the like. Further, for the positive electrode and the negative electrode, an active material layer including each of a positive electrode active material and a negative electrode active material may be formed on a current collector. In general, lithium-containing metal oxides such as $LiCoO_2$ and $LiMn_2O_4$ have been used as the positive electrode active material for the positive electrode, and lithium-free carbon-based active materials and silicon-based active materials have been used as the negative electrode active material for the negative electrode.

Among the negative electrode active materials, the silicon-based active material is attracting attention because the silicon based active material has a high capacity and excellent high-speed charging characteristics compared to the carbon-based active material. However, the silicon-based active material has a disadvantage in that the initial efficiency is low because the degree of volume expansion/contraction due to charging/discharging is large and the irreversible capacity is large.

In order to overcome this disadvantage, a method of maximizing the performance of a secondary battery including a silicon-based active material by doping silicon particles with a Group 13 or Group 15 element is generally known. However, when silicon particles are doped with the above element, a doping source is directly introduced into a raw material or a chemical synthesis method is used, so that the total content of the doping element included in the silicon particles may be freely adjusted, but the doping element is uniformly distributed in the silicon particles. When the total content of the doping element is increased, there is an effect of improving the cycle of the battery, but there is a problem in that the discharge capacity is decreased accordingly.

Therefore, there is a need for developing a method capable of improving the discharge capacity, efficiency and service life of the silicon-based active material, and the like.

[Related Art Documents]

(Patent Document 1) Korean Patent No. 10-1308948

[Detailed Description of the Invention]

[Technical Problem]

The present invention relates to a negative electrode active material, a negative electrode including the negative electrode active material, a secondary battery including the negative electrode, and a method for preparing the negative electrode active material.

[Technical Solution]

An exemplary embodiment of the present invention provides a negative electrode active material having a silicon-based composite, including: silicon-based particles; and one or more elements selected from the group consisting of B and P distributed in the silicon-based particles, in which the silicon-based particles include Si in an amount of 95 parts by weight or more based on 100 parts by weight of the total silicon-based particles, and the element has an increasing concentration gradient from the center to the surface of the silicon-based composite.

An exemplary embodiment of the present invention provides a method for preparing a negative electrode active material, the method including: preparing metal silicon; preparing a doping source including one or more compounds selected from the group consisting of a compound including B and a compound including P; and mixing the metal silicon with the doping source, and then heat-treating the resulting mixture at a temperature equal to or higher than the boiling point of the doping source.

An exemplary embodiment of the present invention provides a negative electrode including the negative electrode active material.

An exemplary embodiment of the present invention provides a secondary battery including the negative electrode.

[Advantageous Effects]

A negative electrode active material according to the present invention includes a silicon-based composite in which silicon particles are doped with B or P, the doping element has an increasing concentration gradient from the center to the surface of the silicon-based composite, and has an initial discharge capacity better than the case of using a uniformly doped active material because a decrease in capacity can be minimized while maximizing the diffusion of Li ions on the surface of the composite.

Further, a method for preparing a negative electrode active material according to the present invention diffuses atoms supplied from a doping source into adjacent silicon particles having micron units, can allow the doping element to have a concentration gradient from a high concentration to a low concentration from the surface to the inside, and has an effect of facilitating mass production because the preparation method is not a chemical synthesis method.

[Best Mode]

Hereinafter, the present specification will be described in more detail.

When one part "includes" one constituent element in the present specification, unless otherwise specifically described, this does not mean that another constituent element is excluded, but means that another constituent element may be further included.

When one member is disposed "on" another member in the present specification, this includes not only a case where the one member is brought into contact with another member, but also a case where still another member is present between the two members.

Terms or words used in the specification should not be interpreted as being limited to typical or dictionary meaning and should be interpreted with a meaning and a concept which conform to the technical spirit of the present invention based on the principle that an inventor can appropriately define a concept of a term in order to describe his/her own invention in the best way.

Singular expressions of the terms used in the present specification include plural expressions unless they have definitely opposite meanings in the context.

In the present specification, the crystallinity of a structure included in a negative electrode active material may be confirmed by X-ray diffraction analysis, the X-ray diffraction analysis may be performed using an X-ray diffraction (XRD) analyzer (trade name: D4-endavor, manufacturer: Bruker), and in addition to the apparatus, an apparatus used in the art may be appropriately employed.

In the present specification, the presence or absence of an element and the content of the element in a negative electrode active material can be confirmed by ICP analysis, and the ICP analysis may be performed using an inductively coupled plasma atomic emission spectrometer (ICPAES, Perkin Elmer 7300).

In the present specification, an average particle diameter ($D_{50}$) may be defined as a particle diameter corresponding to 50% of a cumulative volume in a particle size distribution curve (graph curve of the particle size distribution map) of the particles. The average particle diameter ($D_{50}$) may be measured using, for example, a laser diffraction method. The laser diffraction method can generally measure a particle diameter of about several mm from the submicron region, and results with high reproducibility and high resolution may be obtained.

Hereinafter, preferred exemplary embodiments of the present invention will be described in detail. However, the exemplary embodiments of the present invention may be modified into various other forms, and the scope of the present invention is not limited to the exemplary embodiments which will be described below.

Negative electrode active material

An exemplary embodiment of the present invention provides a negative electrode active material having a silicon-based composite, including: silicon-based particles; and one or more elements selected from the group consisting of B and P distributed in the silicon-based particles, in which the silicon-based particles include Si in an amount of 95 parts by weight or more based on 100 parts by weight of the total silicon-based particles, and the element has an increasing concentration gradient from the center to the surface of the silicon-based composite.

In general, a method of maximizing the performance of a secondary battery including a silicon-based negative electrode active material by doping silicon particles with B or P is known. However, when silicon particles are doped with B or P, a doping source is directly introduced into a raw material or a chemical synthesis method is used, so that the total content of the doping element included in the silicon particles may be freely adjusted, but the doping element is uniformly distributed in the silicon particles. When the total content of the doping element is increased, there is an effect of improving the cycle of the battery, but there is a problem in that the discharge capacity is decreased accordingly.

To solve this problem, the present invention provides an effect capable of minimizing the decrease in capacity while maximizing the diffusion of lithium ions on the surface of the silicon particles, by providing a negative electrode active material in which the doping element is disposed intensively on the surface of the silicon particles. Therefore, a secondary battery including the negative electrode active material has an effect of improving the initial efficiency, resistance performance and/or service life characteristics while minimizing the decrease in discharge capacity of the battery.

In an exemplary embodiment of the present invention, the silicon-based composite includes silicon-based particles; and one or more elements selected from the group consisting of B and P dispersed in the silicon-based particles. In addition, the element has an increasing concentration gradient from the center to the surface of the silicon-based composite.

The silicon-based particles may include one or more selected from the group consisting of Si and $SiO_x$ ($0<x\leq2$). The $SiO_x$ ($0<x\leq2$) may be a composite including amorphous $SiO_2$ and crystalline Si as silicon oxide particles.

In an exemplary embodiment of the present invention, the silicon-based particles may include Si in an amount of 95 parts by weight or more based on 100 parts by weight of the total silicon-based particles. Specifically, the silicon-based particles may include Si in an amount of 96 parts by weight or more, 96.5 parts by weight or more, 97 parts by weight or more, or 97.5 parts by weight or more. Furthermore, the upper limit of the Si content is preferably as high as possible, and the upper limit may be 100 parts by weight or less, 99.9 parts by weight or less, 99.5 parts by weight or less, 99 parts by weight or less, or 98.5 parts by weight or less.

In an exemplary embodiment of the present invention, particularly, pure silicon (Si) may be used as the silicon-based particles. The use of pure silicon (Si) as the silicon-based particles may mean that based on the total 100 parts by weight of the silicon-based particles as described above, pure Si particles (SiOx (x=0)), which are not bound to other particles or elements, are included in the above range.

In an exemplary embodiment of the present invention, O may be included in an amount of less than 5 parts by weight based on 100 parts by weight of the total silicon-based particles. Specifically, O may be included in an amount of less than 4 parts by weight or less than 3.5 parts by weight. The lower limit of the oxygen atom content may be 0 part by weight or more, 0.5 parts by weight or more, 1 part by weight or more, 1.5 parts by weight or more, or 2 parts by weight or more.

In an exemplary embodiment of the present invention, the content of O may be 3 parts by weight or less based on 100 parts by weight of the total silicon-based composite. Specifically, the content of O may be 0 part by weight or more and 3 parts by weight or less, 0.1 parts by weight or more and 3 parts by weight or less, 0.5 parts by weight or more and 3 parts by weight or less, 1 part by weight or more and 3 parts by weight or less, 1.5 parts by weight or more and 3 parts by weight or less, 2 parts by weight or more and 3 parts by weight or less or 2.1 parts by weight or more and 2.9 parts by weight or less. The upper limit of the O content may be 3 parts by weight, 2.9 parts by weight, 2.8 parts by weight, 2.6 parts by weight or 2.5 parts by weight. The lower limit of the O content may be 0 part by weight, 0.1 parts by weight, 0.5 parts by weight, 1 part by weight, 1.5 parts by weight, 2 parts by weight or 2.3 parts by weight.

The above-described oxygen content may be measured by XRF analysis. Specifically, a powder-type sample is placed in a sample cup and scanned with X-rays using a multi-channel X-ray fluorescence analyzer manufactured by Shimadzu Corporation, and then characteristic fluorescence X-rays according to elements generated from the sample are analyzed. By analyzing the spectrum of the sample on the software, the content of each element may be known, and the specific gravity of oxygen in the total weight of the sample may also be similarly confirmed.

The silicon-based particles may be primary particles composed of one lump or secondary particles formed by assembling the primary particles.

In an exemplary embodiment of the present invention, the Si corresponds to a matrix in the silicon-based particles. The Si may be present in the form of SiOx (x=0). That is, the silicon-based particles may mean particles composed only of Si or particles further including Si and a small amount of $SiO_x$ ($0<x\leq2$).

When the silicon particles are doped with B or P, the framework of the Si matrix may be expanded to facilitate the movement of Li ions, so that there is an effect of facilitating the movement of ions into the particles. In addition, doping increases the electrical conductivity of Si particles, which have low conductivity, thereby increasing the charge and discharge performance.

The doping element may be present in a form that substitutes the Si atoms present in the silicon-based particles prior to existing doping. Therefore, the lattice structure of the existing Si matrix may be expanded by the substituted doping element.

The element may be present while having an increasing concentration gradient from the center to the surface of the silicon-based composite. The fact that the element has an increasing concentration gradient means that the concentration of the element includes both continuous and discontinuous increases. In this case, based on the distance Ra from the center to the surface of the silicon-based composite, it is possible to determine whether there is a concentration gradient by measuring the concentration of the doping element based on a region from the center to 0.25 Ra (first region), a region from 0.25 Ra to 0.5 Ra (second region), a region from 0.5 Ra to 0.75 Ra (third region) and a region from 0.75 Ra to the surface (fourth region). In an example, when the concentration of the element in the entire third and fourth regions has a higher value than the concentration of the element in the entire first and second regions, it can be regarded as having an increasing concentration gradient from the center to the surface. In another example, when the concentration of the element in the second region has a higher value than the concentration of the element in the first region, the concentration of the element in the third region has a higher value than the concentration of the element in the second region, and the concentration of the element in the fourth region has a higher value than the concentration of the element in the third region, it can be regarded as having an increasing concentration gradient from the center to the surface.

In the case of having a concentration gradient in which the concentration of the doping element increases from the center to the surface of the silicon-based composite, the doping element is concentrated on the surface of the silicon-based composite, so that it is possible to improve the cycle performance and minimize the decrease in capacity of the battery because the diffusion of lithium ions on the surface of the silicon-based composite can be maximized without increasing the doping amount.

In an exemplary embodiment of the present invention, one or more elements selected from the group consisting of B and P may be included in an amount of 0.1 parts by weight to 50 parts by weight based on 100 parts by weight of the total silicon-based composite. Specifically, the elements may be included in an amount of 0.5 parts by weight to 25 parts by weight, 0.5 parts by weight to 22 parts by weight or 1 part by weight to 21 parts by weight, and more specifically, in an amount of 1 part by weight to 10 parts by weight, 2 parts by weight to 6 parts by weight, or 3 parts by weight to 5 parts by weight. When the negative electrode active material includes the element in the above weight part range, the decrease in capacity of the negative electrode active material may be minimized while forming a sufficient lithium ion diffusion path on the surface of the silicon-based particles, so that there is an effect of increasing the service life performance while maximally maintaining the capacity of the battery.

The content of the element may be confirmed by ICP analysis. Specifically, after a predetermined amount (about 0.01 g) of the negative electrode active material is aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of an element to be analyzed using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the content of the element included in the prepared negative electrode active material may be analyzed by converting the total sum so as to be the theoretical value.

In an exemplary embodiment of the present invention, when the distance from the center to the surface of the silicon-based composite is defined as Ra, the concentration of the B or P element included in the region (fourth region) from the point where Ra becomes 0.75 Ra in a direction from the center to the surface of the silicon-based composite to the surface may have a higher value than the concentration of the B or P element included in the remaining regions. Specifically, the concentration may have a value higher by 10% to 10,000%, and more specifically, may have a value higher by 50% to 5,000%. In another exemplary embodiment, the concentration may have a value higher by 100% to 1,000%, 100% to 800%, 100% to 700%, 100% to 600% or 100% to 500%. In this case, the concentration of the element in a specific region may mean the wt% of the element based on the total weight of the specific region. When the element has the concentration gradient as described above, it is possible to improve the cycle performance and minimize the decrease in capacity of the battery because the diffusion of lithium ions on the surface of the silicon-based composite can be maximized without increasing the doping amount of the element.

In an exemplary embodiment of the present invention, when the distance from the center to the surface of the silicon-based composite is defined as Ra, the concentration of the B or P element included in the region (fourth region) from the point where Ra becomes 0.75 Ra in a direction from the center to the surface of the silicon-based composite to the surface may have a value higher by 20% to 1,000% than the concentration of the B or P element included in the region (third region) from the point where Ra becomes 0.5 Ra in a direction from the center to the surface of the silicon-based composite to the point where Ra becomes 0.75 Ra in a direction from the center to the surface of the silicon-based composite. Specifically, the concentration may have a value higher by 50% to 800%, more specifically, may have a value higher by 70% to 600%, even more specifically, may have a value higher by 100% to 600%, and still even more specifically, may have a value higher by 100% to 500%. When the element has the concentration gradient as described above, it is possible to improve the cycle performance and minimize the decrease in capacity of the battery because the diffusion of lithium ions on the surface of the silicon-based composite can be maximized without increasing the doping amount of the element.

In an exemplary embodiment of the present invention, when the distance from the center to the surface of the silicon-based composite is defined as Ra, the concentration of the B or P element included in the region (fourth region) from the point where Ra becomes 0.75 Ra in a direction from the center to the surface of the silicon-based composite to the surface may have a value 2-fold to 6-fold higher than the concentration of the B or P element included in the region (third region) from the point where Ra becomes 0.5 Ra in a direction from the center to the surface of the silicon-based composite to the point where Ra becomes 0.75 Ra in a direction from the center to the surface of the silicon-based composite. Specifically, the concentration may have a value 2.3-fold to 5-fold higher, and more specifically, may have a value 2.5-fold to 4-fold higher, or 2.5-fold to 3.5-fold higher. When the element has the concentration gradient as described above, the element has an optimal concentration gradient, so that it is possible to improve the cycle performance and minimize the decrease in capacity of the battery because the diffusion of lithium ions on the surface of the silicon-based composite can be maximized without increasing the doping amount of the element.

In an exemplary embodiment of the present invention, when the distance from the center to the surface of the silicon-based composite is defined as Ra, the concentration of the B or P element included in the region (third region) from the point where Ra becomes 0.5 Ra in a direction from the center to the surface of the silicon-based composite to the point where Ra becomes 0.75 Ra in a direction from the center to the surface of the silicon-based composite may have a value 2.5-fold to 5-fold higher than the concentration of the B or P element included in the region (second region) from the point where Ra becomes 0.25 Ra in a direction from the center to the surface of the silicon-based composite to the point where Ra becomes 0.5 Ra in a direction from the center to the surface of the silicon-based composite. Specifically, the concentration may have a value 3-fold to 5-fold higher, and more specifically, may have a value 3.5-fold to 4.5-fold higher. When the element has the concentration gradient as described above, the element has an optimal concentration gradient, so that it is possible to improve the cycle performance and minimize the decrease in capacity of the battery because the diffusion of lithium ions on the surface of the silicon-based composite can be maximized without increasing the doping amount of the element.

In the present specification, the distance Ra from the center to the surface of the silicon-based composite may be calculated like a radius when the silicon-based composite is converted into a sphere having the same cross-sectional area. Further, the center of the silicon-based composite may mean the center of gravity of the silicon-based composite.

In an exemplary embodiment of the present invention, the concentration of the B or P element in a region corresponding to the remaining 60 vol% may be higher than the concentration of the B or P element in a region corresponding to 40 vol% based on the total volume of the silicon-based composite in a direction from the center to the surface of the silicon-based composite. When the doping element is distributed on the surface of the silicon-based composite in the aforementioned range, it is possible to improve the cycle performance and minimize the decrease in capacity of the battery because the diffusion of lithium ions on the surface of the silicon-based particles can be maximized without increasing the doping amount of the element.

In an exemplary embodiment of the present invention, the concentration in a region corresponding to the remaining 60 vol% may have a value higher by 10% to 10,000% than the concentration of the B or P element included in a region corresponding to 40 vol% based on the total volume of the silicon-based composite in a direction from the center to the surface of the silicon-based composite. Specifically, the concentration may have a value higher by 50% to 5,000%, and more specifically, may have a value higher by 100% to 1,000%. In another exemplary embodiment, the concentration may have a value higher by 100% to 800%, more specifically, may have a value higher by 100% to 600%, and even more specifically, may have a value higher by 100% to 500%. When the element has the concentration gradient as described above, it is possible to improve the cycle performance and minimize the decrease in capacity of the battery because the diffusion of lithium ions on the surface of the silicon-based composite can be maximized without increasing the doping amount of the element.

In an exemplary embodiment of the present invention, the weight of the B or P element included in the region (fourth region) from the point where Ra becomes 0.75 Ra in a direction from the center to the surface of the silicon-based composite to the surface may have a higher value than the weight of the B or P element included in the remaining regions. Specifically, the weight may have a value higher by 50% to 2,000%, more specifically, may have a value higher by 70% to 1,500%, even more specifically, may have a value higher by 100% to 1,300%, and still even more specifically, may have a value higher by 200% to 1,000%. In this case, the remaining region may mean a region until a point where Ra becomes 0.75 Ra in a direction from the center to the surface of the silicon-based composite. When the above element has the aforementioned weight difference according to the region of the silicon-based composite, it is possible to improve the cycle performance and minimize the decrease in capacity of the battery because the diffusion of lithium ions on the surface of the silicon-based composite can be maximized without increasing the doping amount of the element.

In an exemplary embodiment of the present invention, the lower limit value of the content of the doping element (B or P element) in the second region may be 0.05 wt%. Specifically, the content of the doping element in the second region may be 0.05 wt% to 5 wt%, 0.05 wt% to 3.5 wt% or 0.1 wt% to 3 wt%.

In an exemplary embodiment of the present invention, the lower limit value of the content of the doping element in the third region may be 0.05 wt% or 0.1 wt%. The content of the doping element in the third region may be 0.1 wt% to 15 wt% or less or 0.5 wt% to 12 wt%.

In an exemplary embodiment of the present invention, the lower limit value of the content of the doping element in the fourth region may be 1 wt%. Specifically, the content of the doping element in the fourth region may be 1 wt% to 40 wt% or less, 2 wt% to 35 wt% or 3 wt% to 30 wt%.

When the content of the doping element in each region does not meet the above range, the doping element is located only on the surface of the particles because doping cannot be smoothly performed into the inside of the silicon-based particles, so that there is a problem in that the doping amount itself is small and the doped materials are easily removed during the cleaning process of the active material, or there is a problem in that the discharge capacity is decreased due to excessive doping.

In an exemplary embodiment of the present invention, when the distance from the center to the surface of the silicon-based composite is defined as Ra, the concentration of the O element included in the region (fourth region) from the point where Ra becomes 0.75 Ra in a direction from the center to the surface of the silicon-based composite to the surface may have a value 1.1-fold to 10-fold higher than the concentration of the O element included in the region (third region) from the point where Ra becomes 0.5 Ra in a direction from the center to the surface of the silicon-based composite to the point where Ra becomes 0.75 Ra in a direction from the center to the surface of the silicon-based composite. Specifically, the concentration may have a value 1.2-fold to 8-fold higher, 1.2-fold to 5-fold higher or 1.3-fold to 3-fold higher. When the concentration of O element in the fourth region exceeds the above range, O is distributed in an excessive amount on the surface of the silicon-based composite, so that there is a problem in that initial efficiency and capacity retention rate are reduced.

In an exemplary embodiment of the present invention, when the distance from the center to the surface of the silicon-based composite is defined as Ra, the concentration of the O element included in the region (third region) from the point where Ra becomes 0.5 Ra in a direction from the center to the surface of the silicon-based composite to the point where Ra becomes 0.75 Ra in a direction from the center to the surface of the silicon-based composite may have a value 1.2-fold to 10-fold higher than the concentration of the O element included in the region (second region) from the point where Ra becomes 0.25 Ra in a direction from the center to the surface of the silicon-based composite to the point where Ra becomes 0.5 Ra in a direction from the center to the surface of the silicon-based composite. Specifically, the concentration may have a value 1.2-fold to 8-fold higher, 1.5-fold to 5-fold higher or 1.7-fold to 3-fold higher.

In an exemplary embodiment of the present invention, the crystal grains of Si may have a size of 5 nm to 1,000 nm. Specifically, the crystal grains of Si may have a size of 10 nm to 500 nm or 50 nm to 300 nm, 100 nm to 300 nm, 150 nm to 300 nm, or 180 nm to 300 nm. More specifically, the Si crystal grains may have a size of 180 nm to 260 nm. When the crystal grains of Si satisfy the above range, the Li ions may diffuse more uniformly into the Si crystal grains, thereby preventing accelerated deterioration of the material and stably maintaining the structure of the Si particles during charging and discharging, so that there is an effect of improving the cell service life.

In an exemplary embodiment of the present invention, a carbon layer may be provided on at least a part of the surface of the silicon-based composite. In this case, the carbon layer may be in the form of covering at least a part of the surface, that is, partially covering the surface of the composite, or covering the entire surface of the composite. By the carbon layer, conductivity is imparted to the negative electrode active material, and the initial efficiency, service life characteristics, and battery capacity characteristics of the secondary battery may be improved.

Specifically, the carbon layer may include crystalline carbon or amorphous carbon, and preferably, may include amorphous carbon.

The crystalline carbon may further improve the conductivity of the negative electrode active material. The crystalline carbon may include at least one selected in the group consisting of fullerene, carbon nanotubes and graphene.

The amorphous carbon may suppress the expansion of the silicon-based particles by appropriately maintaining the strength of the carbon layer. The amorphous carbon may be a carbon-based material formed using at least one carbide selected from the group consisting of tar, pitch and other organic materials, or a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon of the substituted or unsubstituted aliphatic or alicyclic hydrocarbon may be metherin, etherin, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

Specifically, the carbon layer may be formed by disposing a carbonaceous precursor on the silicon-based composite and then heat-treating the carbonaceous precursor. The carbonaceous precursor may be graphene, graphite and the like for the preparation of crystalline carbon, at least one carbide selected from the group consisting of tar, pitch and other organics for the preparation of amorphous carbon, or a carbon-based material formed using a hydrocarbon such as methane, ethane and acetylene as a source for a chemical vapor deposition method.

In an exemplary embodiment of the present invention, the carbon layer may be included in an amount of 0.1 parts by weight to 50 parts by weight, specifically 0.5 parts by weight to 10 parts by weight or 20 parts by weight, and more specifically 2 parts by weight to 4 parts by weight based on 100 parts by weight of the total negative electrode active material. When the above range is satisfied, it is possible to prevent the decrease in capacity and efficiency through a decrease in side reactions and an increase in electrical conductivity through surface coating of the negative electrode active material.

The negative electrode active material may have an average particle diameter ($D_{50}$) of 0.5 um to 50 um, specifically 2 um to 20 $\mu$m, more specifically 2 um to 10 $\mu$m, and more specifically 2 um to 7 um. When the above range is satisfied, the structural stability of the active material during charging and discharging may be secured. In addition, it is possible to prevent the level of volume expansion/contraction when the particle diameter is too large from being increased, and it is possible to prevent the decrease in initial efficiency which may be caused by the occurrence of side reactions due to high surface area relative to volume when the particle diameter is too small.

The particle size of the negative electrode active material may be adjusted by a method such as a ball mill, a jet mill, or an air current classification, and the method is not limited thereto.

Preparation method of negative electrode active material

An exemplary embodiment of the present invention provides a method for preparing a negative electrode active material, the method including: preparing metal silicon; preparing a doping source including one or more compounds selected from the group consisting of a compound including B and a compound including P; and mixing the metal silicon with the doping source, and then heat-treating the resulting mixture at a temperature equal to or higher than the boiling point of the doping source.

In general, a method of maximizing the performance of a secondary battery including a silicon-based negative electrode active material by doping silicon-based particles with a B or P element is known. In the related art, when the silicon-based particles are doped with the B or P element, a doping source is directly added to a silicon raw material in a liquid state or a chemical synthesis method is used. When the negative electrode active material is prepared by the aforementioned method, the doping element is uniformly distributed in the silicon particles. However, when the total content of the doping element is increased, there is an effect of improving the cycle of the battery, but there is a problem in that the discharge capacity is decreased accordingly.

To solve this problem, the present invention provides a method for preparing a negative electrode active material by mixing metallic silicon whose grain size is adjusted to a micron size with a doping source and then heat-treating the mixture to distribute the doping element intensively on the surface of the silicon particles. The negative electrode active material prepared by the aforementioned method has an effect of improving the initial efficiency, resistance performance and/or service life characteristics while minimizing the decrease in discharge capacity of the battery by minimizing the decrease in capacity while maximizing the diffusion of lithium ions on the surface of the silicon-based composite. Furthermore, in the case of the above preparation method, a temperature sufficient to melt silicon is not required, so that there is an advantage in that the reaction conditions are milder than the existing method and the mass production is easy because the above preparation method is not a chemical synthesis method.

The metal silicon means a silicon raw material having a Si purity of 99% or more. Metal silicon generally used in the corresponding field may be appropriately adopted and used.

In an example, the metal silicon may be obtained by inducing a reduction reaction of silica sand ($SiO_2$) using a thermal reduction reaction using carbon in an electric furnace, preparing Si in a liquid state, and then cooling the Si.

In an exemplary embodiment of the present invention, the method may further include pulverizing and classifying the metal silicon after the preparing of the metal silicon.

The pulverization and classification of the metal silicon may be performed before the mixing of the metal silicon and the doping source to be described below and heat-treating of the mixture. When pulverization and classification are not performed prior to the heat treatment step, there is a limitation to the diffusion of the heterogeneous elements into the silicon during the doping of the heterogeneous elements, so that there is a problem in that the doping itself may not be properly performed. Therefore, by pulverizing and classifying silicon at a micro-size level, the heterogeneous elements may be diffused into the silicon to distribute the heterogeneous elements at an appropriate level. In addition, since the doping source and the silicon may be uniformly mixed by pulverizing and classifying the metal silicon first, the silicon may be uniformly doped with the heterogeneous elements, respectively.

The metal silicon may be pulverized using a jet mill device or a ball mill device using a physical collision method.

The metal silicon may be classified using a dry classification method (wind force classifier) or a wet classification method (hydrocyclone). For example, the metal silicon may be classified using an air classification method.

The pulverized and classified metal silicon may have a $D_{50}$ of 1 um to 20 um, specifically 2 um to 10 $\mu$m, and more specifically 2 um to 7 um. By satisfying the above range, there is an effect of minimizing particle cracking due to charging and discharging and maximally suppressing side reactions that occur therefrom, thereby increasing cell service life performance.

The compound including B may be one or more selected from the group consisting of $H_3BO_3$ (boric acid) and BN (boron nitride).

The compound including P may be one or more selected from the group consisting of $H_3PO_4$ (phosphoric acid) and $P_2O_5$ (phosphorus pentoxide).

The heat treatment may be performed at a temperature less than the melting point of metal silicon. Specifically, the heat treatment may be performed at a temperature less than 1414°C.

Furthermore, the heat treatment may be performed at a temperature equal to or higher than the boiling point of the doping source.

The heat treatment may be performed at 300°C to 1,400°C. The heat treatment may be performed specifically at 400°C to 1,000°C, 500°C to 1,000°C or 600°C to 1,000°C, and more specifically at 700°C to 900°C for 2 hours to 5 hours. For example, the heat treatment may be performed at a temperature of 700°C to 900°C under Ar gas purging conditions for 3 hours.

When the heat treatment temperature is higher than the above range, the silicon particles are melted and silicon in a liquid state is doped, so that the doping elements are uniformly distributed over the silicon. Therefore, when the doping amount is increased to obtain the desired cycle characteristics, the discharge capacity may be rather decreased. Further, the higher the heat treatment temperature, the larger the crystal grains of Si, so that the electrochemical performance of the silicon-based composite doped with the element may be reduced.

In contrast, when the heat treatment temperature satisfies the above range, the doping source is evaporated, but the silicon is not melted. Therefore, since the atoms released from the doping source may be diffused into adjacent silicon particles to dope the silicon particles with the element and the doping element is usually distributed on the surface of the silicon-based particles with a concentration gradient, cycle characteristics may be easily improved and the decrease in capacity may be minimized even though the silicon particles are doped with a small amount of the element. In addition, when the heat treatment temperature is too low, it is possible to easily prevent the problem in that the doping itself is not performed well.

For example, when $B_2O_3$ (melting point = 450°C, boiling point = 1860°C) is used as a doping source, $B_2O_3$ is present in a liquid state upon heat treatment at a temperature less than the melting point (about 1400°C) of the metal silicon, so that since $B_2O_3$ diffuses only near the surface of metal silicon particles, there is a problem in that the doping amount is very small, or the surface is oxidized. In contrast, when the heat treatment is performed at a temperature equal to or higher than the boiling point (1860°C) of $B_2O_3$, there is a problem in that it is difficult to obtain a negative electrode active material that satisfies a desired doping concentration gradient because silicon particles are melted and react in a liquid state.

The temperature rising condition during the heat treatment may be 1°C/min to 10°C/min, specifically 3°C/min to 7°C/min or 4°C/min to 6°C/min.

In an exemplary embodiment of the present invention, the method may further include forming a carbon layer on at least a part of a silicon-based composite formed after the mixing of the metal silicon with the doping source, and then heat-treating of the resulting mixture.

The carbon layer may be formed using chemical vapor deposition (CVD) using a hydrocarbon gas or by a method of carbonizing a material which is a carbon source.

Specifically, the carbon layer may be formed by introducing the silicon-based particles into a reaction furnace, and then subjecting a hydrocarbon gas to chemical vapor deposition (CVD) at 900°C to 1,100°C. The hydrocarbon gas may be at least one hydrocarbon gas selected from the group consisting of methane, ethane, propane and acetylene, and may be heat-treated at 900°C to 1,100°C.

## Negative electrode

The negative electrode according to an exemplary embodiment of the present invention may include the above-described negative electrode active material.

Specifically, the negative electrode may include a negative electrode current collector and a negative electrode active material layer disposed on the negative electrode current collector. The negative electrode active material layer may include the negative electrode active material. Furthermore, the negative electrode active material layer may further include a binder and/or a conductive material.

The negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or a material in which aluminum or stainless steel whose surface is surface-treated with carbon, nickel, titanium, silver, and the like. Specifically, a transition metal, such as copper or nickel which adsorbs carbon well, may be used as a current collector. Although the current collector may have a thickness of 6 um to 20 $\mu$m, the thickness of the current collector is not limited thereto.

The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a metal powder such as a fluorocarbon powder, an aluminum powder, and a nickel powder; a conductive whisker such as zinc oxide and potassium titanate; a conductive metal oxide such as titanium oxide; a conductive material such as polyphenylene derivatives, and the like.

## Secondary battery

A secondary battery according to an exemplary embodiment of the present invention may include the above-described negative electrode according to an exemplary embodiment. Specifically, the secondary battery may include a negative electrode, a positive electrode, a separator interposed between the positive electrode and the negative electrode, and an electrolyte solution, and the negative electrode is the same as the above-described negative electrode. Since the negative electrode has been previously described, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which aluminum or stainless steel is surface-treated with carbon, nickel, titanium, silver, and the like. Further, the positive electrode current collector may typically have a thickness of 3 to 500 um, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_2$; a Ni site type lithium nickel oxide expressed as chemical formula $LiNi_{1-c2}M_{c2}O_2$ (here, M is at least one selected from the group consisting of Co, Mn, Al, Cu, Fe, Mg, B and Ga, and c2 satisfies $0.01 \leq c2 \leq 0.5$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte solution is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte solution include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte solution may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such a cyclic carbonate may be more preferably used since the cyclic carbonate may be mixed with a linear carbonate of a low viscosity and low permittivity such as dimethyl carbonate and diethyl carbonate in an appropriate ratio and used to prepare an electrolyte solution having a high electric conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte solution, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte solution constituent components.

According to still another exemplary embodiment of the present invention, provided are a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

[Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**<Example 1>**

**Example 1-1**

After a reduction reaction of silica sand (SiO$_2$) was induced in an electric furnace using a thermal reduction reaction using carbon, Si in a liquid state was produced. Specifically, a high current of 10,000 A or more was passed through a graphite electrode to produce Si in a liquid state at 2,000°C. Next, the Si was gradually cooled to room temperature, and then the cooled silicon mass as a raw material was coarsely pulverized and air-classified to obtain a metal silicon powder having a size of D$_{50}$ = 5 μm. 120 g of a powder obtained by mixing 60 g (1:1 weight ratio) of each of of metal silicon powder (Si powder) and H$_3$BO$_3$ powder as a doping source was heated under an Ar gas environment at a reaction temperature of 500°C in a reaction furnace. In this case, the temperature rising condition was 5°C/min. Next, after cooling to room temperature at 5°C/min, the reaction-completed powder was collected, and then the powder and water were mixed to remove unreacted doping sources, and then a washing process at 6,000 rpm for 5 minutes using a centrifuge was performed 3 times. The supernatant was discarded, and a mixture gathered at the bottom was collected and dried in an oven at 60°C. Thereafter, in order to remove lumps of particles generated during the heat treatment, a sieving process was finally performed using a filter having a size of 325 mesh to prepare a negative electrode active material.

**Example 1-2**

A negative electrode active material was prepared in the same manner as in Example 1-1, except that the mixture was heated at a reaction temperature of 700°C.

**Example 1-3**

A negative electrode active material was prepared in the same manner as in Example 1-1, except that the mixture was heated at a reaction temperature of 900°C.

**Example 1-4**

A negative electrode active material was prepared in the same manner as in Example 1-1, except that H$_3$PO$_4$ was used instead of H$_3$BO$_3$.

**Comparative Example 1-1**

After a reduction reaction of silica sand (SiO$_2$) was induced in an electric furnace using a thermal reduction reaction using carbon, Si in a liquid state was produced. Specifically, a high current of 10,000 A or more was passed through a graphite electrode to produce Si in a liquid state at 2,000°C. After H$_3$BO$_3$ (boric acid) was added such that the content of B became 5 wt% of the total Si in a liquid state at 2,000°C, the resulting mixture was slowly cooled to room temperature. Thereafter, a silicon mass doped with cooled B was used as a raw material, and coarsely pulverized and air-classified to obtain a negative electrode active material powder having a size of D$_{50}$ = 5 um. Thereafter, the sieving process was finally performed using a filter with a size of 325 mesh to prepare a negative electrode active material doped with B.

**Comparative Example 1-2**

A negative electrode active material doped with P was prepared in the same manner as in Comparative Example 1-1, except that H$_3$PO$_4$ was used instead of H$_3$BO$_3$, such that the content of P became 5 wt% of the total Si.

**Comparative Example 1-3**

A negative electrode active material was prepared in the same manner as in Example 1-1, except that B$_2$O$_3$ was used instead of H$_3$BO$_3$.
The configurations of the negative electrode active materials prepared in the Examples and Comparative Examples are shown in the following Table 1.

[Table 1]

| | Si content (Based on 100 parts by weight of total negative electrode active material) | O content (Based on 100 parts by weight of total negative electrode active material) | Doping element | Reaction temperature (°C) | Contents of total doping elements (B, P) (based on 100 parts by weight of total nega tive electrode active material) | Presence or absence of concen tration gradient | Si crystal grain size (nm) |
|---|---|---|---|---|---|---|---|
| Example 1-1 | 94.4 | 2.1 | B | 500 | 3.2 | ○ | 190 |
| Example 1-2 | 87.1 | 2.4 | B | 700 | 10.3 | ○ | 220 |
| Example 1-3 | 76.6 | 2.5 | B | 900 | 20.9 | ○ | 250 |
| Example 1-4 | 95.1 | 2.9 | P | 500 | 2 | ○ | 185 |
| Comparative Example 1-1 | 90.9 | 4.1 | B | 2,000 | 5 | X | 170 |
| Comparative Example 1-2 | 91.1 | 3.9 | P | 2,000 | 5 | X | 160 |
| Comparative Example 1-3 | 96.4 | 3.4 | B | 500 | 0.2 | Δ | 190 |

The element concentration in each region of the negative electrode active materials prepared in the Examples and Comparative Examples is shown in the following Table 2.

[Table 2]

| Concentration of element (wt% of element based on corresponding region) | | | | | |
|---|---|---|---|---|---|
| | | Region from 0.75 Ra to surface | Region of 0.5 Ra or more and less than 0.75 Ra | Region of 0.25 Ra or more and less than 0.5 Ra | Region of less than about 0.25 Ra |
| Example 1-1 | B | 5 | 1 | 0.3 | 0 |
| | ○ | 2.4 | 1.3 | 0.5 | 0.2 |
| Example 1-2 | B | 14 | 6 | 1.5 | 0.5 |
| | ○ | 2.8 | 1.4 | 0.7 | 0.3 |
| Example 1-3 | B | 30 | 12 | 3 | 1 |
| | ○ | 3.1 | 2.3 | 1.3 | 0.3 |
| Example 1-4 | P | 3 | 0.5 | 0.1 | 0 |
| | ○ | 3.5 | 2.4 | 1.3 | 0.6 |
| Comparative Example 1-1 | B | 5 | 5 | 5 | 5 |
| | ○ | 4.1 | 4.1 | 4.1 | 4.1 |
| Comparative Example 1-2 | B | 5 | 5 | 5 | 5 |
| | ○ | 3.9 | 3.9 | 3.9 | 3.9 |
| Comparative Example 1-3 | B | 0.2 | 0 | 0 | 0 |
| | ○ | 3.1 | 0.1 | 0.1 | 0.1 |

The type and total content of the element were confirmed by an ICP analysis using an inductively coupled plasma atomic emission spectrometer (ICP-AES, AVIO 500 from Perkin-Elmer 7300) .
The concentration gradient of the element was measured by SEM EDS analysis after cutting the cross section of the negative electrode active material. Specifically, the cross section of the active material was cut by ion milling, the content of element in the cross section was confirmed by energy-dispersive X-ray spectroscopy (SEM EDS), and the concentration of element in each section was measured by analyzing SEM measurement images.

The distance Ra from the center to the surface of the negative electrode active material was calculated as a radius when the negative electrode active material was converted into a sphere having the same cross-sectional area. Further, the center of the negative electrode active material was measured based on the center of gravity of the negative electrode active material.

The size of Si crystal grains included in the negative electrode active material particles may be confirmed by X-ray diffraction analysis, and the X-ray diffraction analysis was performed by an X-ray diffraction analysis (XRD) analyzer (trade name: D4-endavor, manufacturer: Bruker). Specifically, the XRD measurement was performed by sampling a powder-type sample in a holder and using Cu K alpha X-rays. The size of crystal grains was calculated by fitting the XRD results using the Scherrer equation, and in this case, the size of crystal grains was measured based on Si(111). $(2\theta = 28.4°$ to $28.5°)$

**<Experimental Example 1: Evaluation of discharge capacity, initial efficiency, and service life (capacity retention rate) characteristics>**

Negative electrodes and secondary batteries were manufactured using the negative electrode active materials in the Examples and the Comparative Examples, respectively.

**Manufacture of negative electrode**

A negative electrode slurry including the negative electrode active material having an average particle size $(D_{50})$ of 5 um prepared in Example 1-1, single-walled carbon nanotubes, plate-like artificial graphite, carbon black as a conductive material, a polyacrylamide-based polymer as a binder, and water as a solvent was prepared.

The negative electrode slurry was applied to a copper (Cu) metal thin film which is a negative electrode current collector having a thickness of 20 $\mu$m and dried. In this case, the temperature of the circulating air was 60°C. Subsequently, a negative electrode was manufactured by roll pressing the negative electrode current collector and drying the negative electrode current collector in a vacuum oven at 130°C for 12 hours (loading amount: 8.55 mAh/cm$^2$).

In the manufactured negative electrode, the weight ratio of the negative electrode active material, the single-walled carbon nanotubes, the plate-like artificial graphite, the conductive material, and the binder was 70:0.21:10:10:9.79.

Furthermore, the negative electrodes of Examples 1-2 to 1-4 and Comparative Examples 1-1 to 1-3 were manufactured in the same manner as in Example 1-1, except that the negative electrode active materials of Examples 1-2 to 1-4 and Comparative Examples 1-1 to 1-3 were used, respectively, instead of the negative electrode active material of Example 1-1.

**Manufacture of secondary battery**

A lithium metal foil was prepared as a positive electrode.
Coin-type half cells of Examples 1-1 to 1-4 and Comparative Examples 1-1 to 1-3 were manufactured by interposing a porous polyethylene separator between the negative electrodes of Examples 1-1 to 1-4 and Comparative Examples 1-1 to 1-3 manufactured above and the positive electrode and injecting an electrolyte solution thereinto.

As the electrolyte solution, a product obtained by dissolving 0.5 wt% of vinylene carbonate (VC) in a solution of ethyl methyl carbonate (EMC) and ethylene carbonate (EC) mixed at a volume ratio of 7:3, and dissolving LiPF$_6$ at a concentration of 1 M was used.

**Evaluation of discharge capacity, initial efficiency and capacity retention rate**

The discharge capacity, initial efficiency, and capacity retention rate were evaluated by charging and discharging the manufactured battery, and are shown in the following Table 3. For the 1st and 2nd cycles, the battery was charged and discharged at 0.1 C, and from the 3rd to 49th cycles, the battery was charged and discharged at 0.5 C.

Charging conditions: CC (constant current)/CV (constant voltage) (5 mV/0.005 C current cut-off)
Discharging conditions: CC (constant current) conditions 1.0 V voltage cut-off

The discharge capacity (mAh/g) and initial efficiency (%) were derived from the results during one-time charge/discharge.

- Discharge capacity (mAh/g) of negative electrode active material = measured discharge capacity / loading amount of negative electrode active material

- Charge capacity (mAh/g) of negative electrode active material = measured charge capacity / loading amount of negative electrode active material

- Initial efficiency (%) = (discharge capacity (mAh/g) of negative electrode active material / charge capacity (mAh/g) of negative electrode active material)×100

The charge retention rate was each derived by the following calculation.

- Capacity retention rate (%) = (49 times discharge capacity / 1 time discharge capacity)×100

[Table 3]

|  | Discharge capacity (mAh/g) | Initial efficiency (%) | Capacity retention rate (%) |
|---|---|---|---|
| Example 1-1 | 3300 | 92.3 | 95 |
| Example 1-2 | 2900 | 86.7 | 96.2 |
| Example 1-3 | 2100 | 83.2 | 96.7 |
| Example 1-4 | 3150 | 91.5 | 93 |
| Comparative Example 1-1 | 2650 | 84.2 | 78 |
| Comparative Example 1-2 | 2400 | 82.3 | 76 |
| Comparative Example 1-3 | 2730 | 85 | 87 |

A negative electrode active material according to an exemplary embodiment of the present invention is characterized in that B or P has an increasing concentration gradient from the center to the surface of the negative electrode active material.

In Table 3, it can be confirmed that Examples 1-1 to 1-4 all have excellent discharge capacity, initial efficiency and capacity retention rate.

In contrast, in Comparative Examples 1-1 and 1-2, there is no concentration gradient in the negative electrode active material because the negative electrode active material is uniformly doped with B and P.

In Comparative Example 1-1, the doping element was uniformly present in the active material even though the total content of doping element was higher than that in Example 1-1, so that it could be confirmed that the initial efficiency and the capacity retention rate were lowered.

In Comparative Example 1-2, the doping element was uniformly present in the active material even though the total content of doping element was higher than that in Example 1-4, so that it could be confirmed that the initial efficiency and the capacity retention rate were lowered.

In Comparative Example 1-3, $B_2O_3$ was used as a doping source, and since the boiling point of $B_2O_3$ is 1860°C, $B_2O_3$ reacts in a liquid state during the reaction at 500°C, so that the doping element cannot be smoothly introduced into the inside of the silicon-based particles, and is located only on the particle surface. Therefore, the active material of Comparative Example 3 does not have an increasing concentration gradient from the center to the surface of the particles, but rather the $B_2O_3$ is concentrated only on the surface of the particle, so that there is a problem in that materials doped in the washing process of the negative electrode active material are easily removed. In addition, it could be confirmed that the initial efficiency and the capacity retention rate were lowered because O was excessively distributed.

In contrast, in Examples 1-1 to 1-4, the doping source reacts in a gas state to have an appropriate concentration gradient in the silicon-based particles in a solid state, and since the silicon-based particles are doped while oxygen is removed, oxygen was scarcely present in the negative electrode active material, so that it could be confirmed that the initial efficiency and capacity retention rate were improved.

**<Example 2>**

**Example 2-1**

After a reduction reaction of silica sand ($SiO_2$) was induced in an electric furnace using a thermal reduction reaction using carbon, Si in a liquid state was produced. Specifically, a high current of 10,000 A or more was passed through a graphite electrode to produce Si in a liquid state at 2,000°C. Next, the Si was gradually cooled to room temperature, and then the cooled silicon mass as a raw material was coarsely pulverized and air-classified to obtain a metal silicon powder having a size of $D_{50}$ = 5 $\mu$m. 150 g of a powder obtained by mixing 60 g (1:1 weight ratio) of metal silicon powder (Si powder) and $H_3BO_3$ powder as a doping source was heated under an Ar gas environment at a reaction temperature of 500°C in a reactor. In this case, the temperature rising condition was 5°C/min. Next, after cooling to room temperature at 5°C/min, the reaction-completed powder was collected, and then the powder and water were mixed to remove unreacted doping sources, and then a washing process at 6,000 rpm for 5 minutes using a centrifuge was performed 3 times. The supernatant was discarded, and a mixture gathered at the bottom was collected and dried in an oven at 60°C. Thereafter, in order to remove lumps of particles generated during the heat treatment, a sieving process was finally performed using a filter having a size of 325 mesh to prepare a negative electrode active material.

**Example 2-2**

150 g of a powder obtained by mixing 60 g (1:1 weight ratio) of metal silicon powder (Si powder) and $H_3BO_3$ powder as a doping source was heated under an Ar gas environment at a reaction temperature of 500°C in a reactor. In this case, the temperature rising condition was 7°C/min.

**Example 2-3**

150 g of a powder obtained by mixing 60 g (1:1 weight ratio) of metal silicon powder (Si powder) and $H_3BO_3$ powder as a doping source was heated under an Ar gas environment at a reaction temperature of 500°C in a reactor. In this case, the temperature rising condition was 3°C/min.

**Comparative Example 2-1**

After a reduction reaction of silica sand ($SiO_2$) was induced in an electric furnace using a thermal reduction reaction using carbon, Si in a liquid state was produced. Specifically, a high current of 10,000 A or more was passed through a graphite electrode to produce Si in a liquid state at 2,000°C. After $H_3BO_3$ (boric acid) was added such that the content of B became 4.12 wt% of the total Si in a liquid state at 2,000°C, the resulting mixture was slowly cooled to room temperature. Thereafter, a silicon mass doped with cooled B was used as a raw material, and coarsely pulverized and air-classified to obtain a negative electrode active material powder having a size of $D_{50}$ = 5 um. Thereafter, the sieving process was finally performed using a filter with a size of 325 mesh to prepare a negative electrode active material doped with B.

The total doping weights of the doping elements in Examples 2-1 to 2-3 and Comparative Example 2-1 are the same, that is, 4.12 parts by weight based on 100 parts by weight of the total negative electrode active material.

[Table 4]

| Concentration of doping element (B) (wt% of doping element based on corresponding region) | | | | |
|---|---|---|---|---|
| | Region from 0.75 Ra to surface | Region of 0.5 Ra or more and less than 0.75 Ra | Region of 0.25 Ra or more and less than 0.5 Ra | Region of less than about 0.25 Ra |
| Example 2-1 | 6 | 2 | 0.5 | 0 |
| Example 2-2 | 6.5 | 1 | 0.5 | 0 |
| Example 2-3 | 5.3 | 2.7 | 2.3 | 0 |
| Comparative Example 2-1 | 4.12 | 4.12 | 4.12 | 4.12 |

**<Experimental Example 2: Evaluation of discharge capacity, initial efficiency, and service life (capacity retention rate) characteristics>**

Negative electrodes and secondary batteries were manufactured using the negative electrode active materials in the Examples and the Comparative Examples, respectively.

**Manufacture of negative electrode**

A negative electrode slurry including the negative electrode active material having an average particle size ($D_{50}$) of 5 um prepared in Example 2-1, single-walled carbon nanotubes, plate-like artificial graphite, carbon black as a conductive material, a polyacrylamide-based polymer as a binder, and water as a solvent was prepared.

The negative electrode slurry was applied to a copper (Cu) metal thin film which is a negative electrode current collector having a thickness of 15 $\mu$m and dried. In this case, the temperature of the circulating air was 60°C. Subsequently, a negative electrode was manufactured by roll pressing the negative electrode current collector and drying the negative electrode current collector in a vacuum oven at 130°C for 12 hours (loading amount: 9.5 mAh/cm$^2$).

In the manufactured negative electrode, the weight ratio of the negative electrode active material, the single-walled carbon nanotubes, the plate-like artificial graphite, the conductive material, and the binder was 70:0.21:10:10:9.79.

Furthermore, the negative electrodes of Examples 2-2 and 2-3 and Comparative Example 2-1 were manufactured in the same manner as in Example 2-1, except that the negative electrode active materials of Examples 2-2 and 2-3 and Comparative Example 2-1 were used, respectively, instead of the negative electrode active material of Example 2-1.

**Manufacture of secondary battery**

A lithium metal foil was prepared as a positive electrode.

Coin-type half cells of Examples 2-1 to 2-3 and Comparative Example 2-1 were manufactured by interposing a porous polyethylene separator between the negative electrodes of Examples 2-1 to 2-3 and Comparative Example 2-1 manufactured above and the positive electrode and injecting an electrolyte solution thereinto.

As the electrolyte solution, a product obtained by dissolving LiPF$_6$ at a concentration of 1 M in a solution of fluoroethylene carbonate (FEC) and ethyl methyl carbonate (EMC) mixed at a volume ratio of 3:7 was used.

**Evaluation of discharge capacity, initial efficiency and capacity retention rate**

The discharge capacity, initial efficiency, and capacity retention rate were evaluated by charging and discharging the manufactured battery, and are shown in the following Table 5. For the 1st and 2nd cycles, the battery was charged and discharged at 0.1 C, and from the 3rd to 49th cycles, the battery was charged and discharged at 0.5 C.

Charging conditions: CC (constant current)/CV (constant voltage) (5 mV/0.005 C current cut-off)
Discharging conditions: CC (constant current) conditions 1.0 V voltage cut-off

The discharge capacity (mAh/g) and initial efficiency (%) were derived from the results during one-time charge/discharge.

```
    - Discharge capacity (mAh/g) of negative electrode
active material = measured discharge capacity / loading amount
of negative electrode active material

      - Charge capacity (mAh/g) of negative electrode active
material = measured charge capacity / loading amount of
negative electrode active material

      - Initial efficiency (%) = (discharge capacity (mAh/g)
of negative electrode active material / charge capacity (mAh/g)
of negative electrode active material)×100
```

The charge retention rate was each derived by the following calculation.

```
      - Capacity retention rate (%) = (49 times discharge
capacity / 1 time discharge capacity)×100
```

[Table 5]

|  | Discharge capacity (mAh/g) | Initial efficiency (%) | Capacity retention rate (%) |
| --- | --- | --- | --- |
| Example 2-1 | 3250 | 91.8 | 94.6 |
| Example 2-2 | 3170 | 90.8 | 89.3 |
| Example 2-3 | 3230 | 91.2 | 91.2 |
| Comparative Example 2-1 | 2850 | 86 | 80 |

The negative electrode active material according to an exemplary embodiment of the present invention is characterized in that B or P has an increasing concentration gradient from the center to the surface of the negative electrode active material, and as described above, it could be seen that in the case of having a concentration gradient as in Examples 2-1 to 2-3, the discharge capacity, initial efficiency and capacity retention rate were significantly improved compared to Comparative Example 2-1 having no concentration gradient. Among them, it could be confirmed that when the concentration gradient as in Example 2-1 was satisfied, particularly, both the initial efficiency and the capacity retention rate were significantly improved.

**Claims**

1.  A negative electrode active material having a silicon-based composite, comprising:

    silicon-based particles; and
    one or more elements selected from the group consisting of B and P distributed in the silicon-based particles,
    wherein the silicon-based particles comprise Si in an amount of 95 parts by weight or more based on 100 parts by weight of the total silicon-based particles, and
    the element has an increasing concentration gradient from the center to the surface of the silicon-based composite.

2. The negative electrode active material of claim 1, wherein a content of O is 3 parts by weight or less based on 100 parts by weight of the total silicon-based composite.

3. The negative electrode active material of claim 1, wherein one or more elements selected from the group consisting of B and P are comprised in an amount of 0.1 parts by weight to 50 parts by weight based on 100 parts by weight of the total silicon-based composite.

4. The negative electrode active material of claim 1, wherein when a distance from the center to the surface of the silicon-based composite is defined as Ra, the concentration of the element comprised in a region from a point where Ra becomes 0.75 Ra in a direction from the center to the surface of the silicon-based composite to the surface has a higher value than the concentration of the element comprised in the remaining regions.

5. The negative electrode active material of claim 1, wherein when a distance from the center to the surface of the silicon-based composite is defined as Ra, the concentration of the element comprised in a region from a point where Ra becomes 0.75 Ra in a direction from the center to the surface of the silicon-based composite to the surface has a value higher by 20% to 1,000% than the concentration of the element comprised in a region from a point where Ra becomes 0.5 Ra in a direction from the center to the surface of the silicon-based composite to a point where Ra becomes 0.75 Ra in a direction from the center to the surface of the silicon-based composite.

6. The negative electrode active material of claim 1, wherein the crystal grains of Si have a size of 5 nm to 1,000 nm.

7. The negative electrode active material of claim 1, wherein the negative electrode active material has a $D_{50}$ of 0.5 um to 50 um.

8. A method for preparing a negative electrode active material, the method comprising:

preparing metal silicon;
preparing a doping source comprising one or more compounds selected from the group consisting of a compound comprising B and a compound comprising P; and
mixing the metal silicon with the doping source, and then heat-treating the resulting mixture at a temperature equal to or higher than the boiling point of the doping source.

9. The method of claim 8, wherein the heat treatment is performed at a temperature less than the melting point of the metal silicon.

10. The method of claim 8, further comprising pulverizing and classifying the metal silicon after the preparing of the metal silicon.

11. The method of claim 10, wherein the pulverized and classified metal silicon has a $D_{50}$ of 0.5 um to 50 um.

12. The method of claim 8, wherein the heat treatment is performed at 300°C to 1,400°C.

13. A negative electrode comprising the negative electrode active material according to any one of claims 1 to 7.

14. A secondary battery comprising the negative electrode according to claim 13.

<div align="center">

**INTERNATIONAL SEARCH REPORT**

</div>

| | International application No. |
|---|---|
| | **PCT/KR2022/018234** |

| A. | CLASSIFICATION OF SUBJECT MATTER |
|---|---|
| | **H01M 4/38**(2006.01)i; **C01B 33/021**(2006.01)i; **H01M 10/052**(2010.01)i; **H01M 4/02**(2006.01)i |

According to International Patent Classification (IPC) or to both national classification and IPC

| B. | FIELDS SEARCHED |
|---|---|

Minimum documentation searched (classification system followed by classification symbols)

    H01M 4/38(2006.01); C22C 28/00(2006.01); H01M 10/05(2010.01); H01M 10/052(2010.01); H01M 4/36(2006.01); H01M 4/48(2010.01)

Documentation searched other than minimum documentation to the extent that such documents are included in the fields searched

    Korean utility models and applications for utility models: IPC as above
    Japanese utility models and applications for utility models: IPC as above

Electronic data base consulted during the international search (name of data base and, where practicable, search terms used)

    eKOMPASS (KIPO internal) & keywords: 음극 활물질(anode active material), 실리콘(silicon), 붕소(boron), 인(phosphorus), 입자(particle), 농도 구배(concentration gradient), 결정(crystal), 도핑(doping), 열처리(heating), 전지(battery)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2016-152213 A (SONY CORP.) 22 August 2016 (2016-08-22)<br>    See paragraphs [0014]-[0033], [0053], [0056], [0070], [0071], [0137] and [0138]; and figures 1-3. | 1-7,13,14 |
| A | | 8-12 |
| X | US 2002-0146623 A1 (SUZUKI, Kimihito et al.) 10 October 2002 (2002-10-10)<br>    See paragraphs [0041]-[0043]. | 8-12 |
| A | JP 2004-311429 A (CANON INC.) 04 November 2004 (2004-11-04)<br>    See claims 1, 5, 9, 10 and 12. | 1-14 |
| A | KR 10-2020-0023240 A (LG CHEM, LTD.) 04 March 2020 (2020-03-04)<br>    See claims 1-7, 11, 13 and 15. | 1-14 |
| A | KR 10-2014-0116198 A (MITSUI MINING & SMELTING CO., LTD.) 01 October 2014 (2014-10-01)<br>    See claims 1-11. | 1-14 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 March 2023** | **06 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/018234**

| Patent document cited in search report | | | Publication date (day/month/year) | Patent family member(s) | | | Publication date (day/month/year) |
|---|---|---|---|---|---|---|---|
| JP | 2016-152213 | A | 22 August 2016 | None | | | |
| US | 2002-0146623 | A1 | 10 October 2002 | JP | 2000-149951 | A | 30 May 2000 |
| | | | | JP | 2001-076726 | A | 23 March 2001 |
| | | | | JP | 4081211 | B2 | 23 April 2008 |
| | | | | KR | 10-2000-0023090 | A | 25 April 2000 |
| | | | | TW | 431002 | A | 21 April 2001 |
| | | | | US | 6555272 | B2 | 29 April 2003 |
| JP | 2004-311429 | A | 04 November 2004 | CN | 101179126 | A | 14 May 2008 |
| | | | | CN | 1765024 | A | 26 April 2006 |
| | | | | EP | 1604415 | A1 | 14 December 2005 |
| | | | | EP | 2302720 | A1 | 30 March 2011 |
| | | | | JP | 2010-135336 | A | 17 June 2010 |
| | | | | JP | 4464173 | B2 | 19 May 2010 |
| | | | | JP | 5517637 | B2 | 11 June 2014 |
| | | | | KR | 10-0721500 | B1 | 23 May 2007 |
| | | | | KR | 10-2005-0114698 | A | 06 December 2005 |
| | | | | TW | 200425569 | A | 16 November 2004 |
| | | | | TW | 235517 | A | 01 July 2005 |
| | | | | TW | I235517 | B | 01 July 2005 |
| | | | | US | 2006-0040182 | A1 | 23 February 2006 |
| | | | | US | 2009-0061322 | A1 | 05 March 2009 |
| | | | | WO | 2004-086539 | A1 | 07 October 2004 |
| KR | 10-2020-0023240 | A | 04 March 2020 | CN | 112514116 | A | 16 March 2021 |
| | | | | EP | 3819967 | A1 | 12 May 2021 |
| | | | | EP | 4068431 | A2 | 05 October 2022 |
| | | | | KR | 10-2021-0093830 | A | 28 July 2021 |
| | | | | KR | 10-2316341 | B1 | 22 October 2021 |
| | | | | KR | 10-2316342 | B1 | 22 October 2021 |
| | | | | US | 2021-0167362 | A1 | 03 June 2021 |
| | | | | WO | 2020-040586 | A1 | 27 February 2020 |
| KR | 10-2014-0116198 | A | 01 October 2014 | CN | 104205432 | A | 10 December 2014 |
| | | | | GB | 2514987 | A | 10 December 2014 |
| | | | | JP | 5572267 | B2 | 13 August 2014 |
| | | | | KR | 10-1612066 | B1 | 12 April 2016 |
| | | | | US | 10505183 | B2 | 10 December 2019 |
| | | | | US | 2015-0064555 | A1 | 05 March 2015 |
| | | | | US | 2017-0352872 | A1 | 07 December 2017 |
| | | | | WO | 2013-151047 | A1 | 10 October 2013 |

Form PCT/ISA/210 (patent family annex) (July 2022)

**REFERENCES CITED IN THE DESCRIPTION**

**Patent documents cited in the description**

- KR 1020210159927
- KR 101308948